# EUROPÄISCHE PATENTANMELDUNG

(11) **EP 2 058 548 A2**
(43) Veröffentlichungstag der Anmeldung: **13.05.2009**
(21) Anmeldenummer: 08167787.4
(22) Anmeldetag: 29.10.2008
(51) Int. Cl.: F16F 9/512

(54) **Schwingungsdämpfer mit amplitudenselektiver Dämpfkraft**

(30) Priorität: 08.11.2007 DE 102007053160
(71) Anmelder: ZF Friedrichshafen AG, 88038 Friedrichshafen (DE)
(72) Erfinder: Denner, Manfred, 97711 Massbach (DE); Doppernas, Michael-Johann, 96170 Priesendorf (DE); Hammer, Thomas, 97653 Bischofsheim (DE); Planitzer, Matthias, 97520 Röthlein (DE)

(57) **Zusammenfassung**

Schwingungsdämpfer (1) mit amplitudenselektiver Dämpfkraft, umfassend eine Kolbenstange (5), die in einem dämpfmediumgefüllten Zylinder axial beweglich geführt ist, wobei die Kolbenstange eine Kolbenanordnung (1) trägt, die den Zylinder in einen kolbenstangenseitigen und einen kolbenstangenfernen Arbeitsraum (7,9) unterteilt, wobei zwischen den Arbeitsräumen eine Strömungsverbindung (39,65,67,79,81,61,63,43,53) vorliegt, die in Abhängigkeit von der Kolbenstangenbewegung von einem zwischen zwei Anschlagflächen (69,71) axial beweglichen Schaltring (77) in Verbindung mit mindestens einem axial beweglichen Ventilring (45,51) in einer Schaltringnut (43,53) eine Dämpfkraft bestimmt, wobei der Schaltring mit einer Anschlagfläche einen den kolbenstangenseitigen Arbeitsraum benachbarten Ringraum und mit einer Anschlagfläche einen den kolbenstangenfernen Arbeitsraum (7) benachbarten Ringraum (79) begrenzt, wobei die axial Ausdehnung der Schaltringnut für den axial beweglichen Ventilring so groß gewählt ist, dass auf einem relevanten Hubbereich der Kolbenstange ein Umströmen des Ventilrings gewährleistet ist

## Beschreibung

Die Erfindung betrifft einen Schwingungsdämpfer mit amplitudenselektiver Dämpfkraft gemäß dem Oberbegriff von Patentanspruch 1.

Aus der DE 10 2006 005 935 A1 ist ein Schwingungsdämpfer bekannt, der zusätzlich zu konventionellen Dämpfventilen am Kolben eine Strömungsverbindung zwischen zwei Arbeitsräumen aufweist, deren Drosselwirkung von einem axial beweglichen Schaltring bestimmt wird. Wenn der Schaltring einen Abstand zu einer der beiden Anschlagflächen einhält, dann liegt die geringste Dämpfkrafteinstellung vor.

Für eine optimale Druckkraftverteilung am Schaltring verfügt die gesamte Dämpfeinrichtung über Bypässe in Form von Sacklochbohrungen, die an zwei Rückschlagventile angeschlossen sind. Die Rückschlagventile werden von axial beweglichen Ventilringen gebildet, die in ihren Schaltringnuten eine minimale Schaltbewegung ausführen können. Die Ventilringe geben je nach Schaltposition einen sogenannten Voröffnungsquerschnitt frei, der dann die Dämpfkraft bestimmt, wenn der Schaltring an einer Anschlagfläche anliegt.

Umfangreiche Fahrversuche haben jedoch gezeigt, dass die in der DE 10 2006 005 935 A1 beschriebene Ventilkonstruktion für einen Zielkonflikt noch keine optimale Lösung bietet. Der Zielkonflikt besteht darin, dass man zwar dann, wenn der Schaltring z. B. eine Mittelstellung einnimmt, die Dämpfkraft herabsetzen kann, diese geringe Dämpfkraft bei einem NKW aber zu einem verschlechterten Wankverhalten führt. Dieses Wankverhalten könnte man vermindern, indem man den Abstand zwischen den Anschlagflächen verkleinert oder das Dämpfkraftniveau anhebt. Beide Maßnahmen stellen aber eine Verschlechterung des Fahrkomforts dar.

Die Aufgabe der vorliegenden Erfindung besteht darin, einen gattungsbildenden Schwingungsdämpfer mit amplitudenselektiver Dämpfkraft derart weiterzuentwickeln, dass der Zielkonflikt zwischen Komfort und Wankverhalten gelöst wird.

Erfindungsgemäß wird die Aufgabe dadurch gelöst, dass die axial Ausdehnung der Schaltringnut für den axial beweglichen Ventilring so groß gewählt ist, dass auf einem relevanten Hubbereich der Kolbenstange ein Umströmen des Ventilrings gewährleistet ist.

Durch die Nutzung des Ventilrings als zusätzlichen Schaltring besteht die Möglichkeit, dass neben einer besonders weichen Dämpfkrafteinstellung, wenn sich der Schaltring in einem Abstand zu einer der Anschlagflächen befindet und dem Betriebszustand, wenn der Schaltring an einer Anschlagfläche anliegt und der Schwingungsdämpfer der normalen Dämpfkraftkennlinie folgt, noch mindestens eine weitere Dämpfkrafteinstellung möglich ist, so dass ein weicherer Übergang zwischen verschiedenen Dämpfkraftkennlinienbereichen erreicht wird. Der zusätzliche Kennlinienbereich mit erhöhter Dämpfkraft verhindert ein unangenehmes Wankverhalten. Der Ventilring in der DE 10 2006 005 935 A1 ist nur ca. 0,5 mm axial beweglich, wobei in den 0,5 mm schon ein Fertigungszuschlag für etwaige Maßtoleranzen an am Ventilring berücksichtigt sind.

Gemäß einem vorteilhaften Unteranspruch ist vorgesehen, dass der Abstand zwischen Nutseitenflächen der Schaltringnut für den Ventilring kleiner ist als der Abstand zwischen den Anschlagflächen für den Schaltring. Mit dieser Maßnahme wird ein Kompromiss zwischen zur Verfügung stehendem Bauraum und einer moderaten Dämpfkraftsteigerung erreicht.

Des Weiteren ist vorgesehen, dass jeweils außerhalb der Anschlagflächen ein Ventilring in einer Schaltringnut zur Verfügung steht.

Der maximale Hubweg des Ventilrings für eine erste Bewegungsrichtung der Kolbenstange ist kleiner als der Hubweg für den Ventilring, der bei einer gegensinnigen Kolbenstangenbewegung wirksam wird. Mit den unterschiedlich langen Schaltwegen der Ventilringe kann nochmals eine zusätzliche Dämpfkrafteinstellung der Kolbenanordnung erzielt werden.

Dazu ist in dem Bypass ein weiterer Voröffnungsquerschnitt angeordnet, der kleiner ist als ein Voröffnungsquerschnitt, der von dem Ventilring angesteuert wird.

Im Hinblick auf eine möglichst einfache Ventilkonstruktion ist in dem Bypass ein Rückschlagventil angeordnet, das in der geschlossenen Position einen Restquerschnitt als weiteren Voröffnungsquerschnitt bestimmt.

Für jede Strömungsrichtung des Dämpfmediums liegt ein Bypass vor und der Schaltring hält auch bei Anlage an einer Anschlagfläche die Queröffnung ausgehend vom Bypass derart teilweise offen, so dass Dämpfmedium über den größeren der beiden Ringräume und der offenen Queröffnung zu einem Bypass für die entgegengesetzte Strömungsrichtung in Richtung des geschlossenen Rückschlagventils strömen kann. Die Bypässe zur Strömungsverbindung zwischen den Ringräumen können für beide Strömungsrichtungen genutzt werden, so dass sich die Geometrie der Kolbenanordnung insgesamt vereinfacht.

Um mit einfachen Mitteln ein Verschließen eines Strömungswegs für eine Dämpfkrafteinstellung und ein Öffnen eines zweiten Strömungswegs für eine andere Dämpfkrafteinstellung zu erreichen, ist eine Kontaktfläche zwischen dem Schaltring und der Mantelfläche zwischen den beiden Anschlagflächen in Axialrichtung der Kolbenanordnung gekrümmt ausgeführt.

Anhand der folgenden Figurenbeschreibung soll die Erfindung näher erläutert werden.

### Es zeigt:

- Fig. 1: Kolbenanordnung in der Ausgangstellung
- Fig. 2: Schnittdarstellung zur Fig. 1
- Fig. 3 - 8: Einzelteile der Kolbenanordnung nach Fig. 1
- Fig. 9 - 16: Betriebsverhalten der Kolbenanordnung für eine erste Bewegungsrichtung

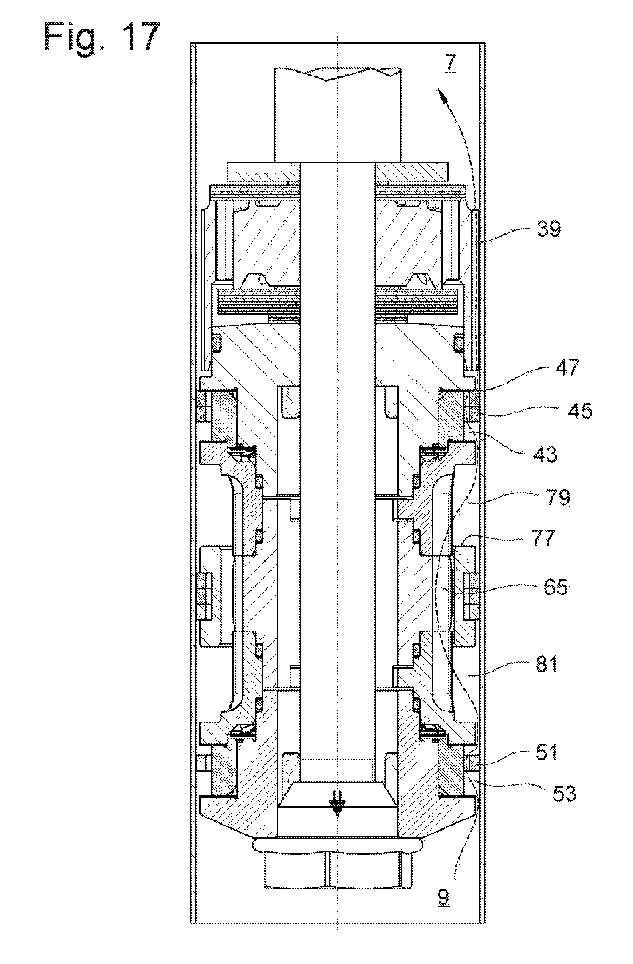

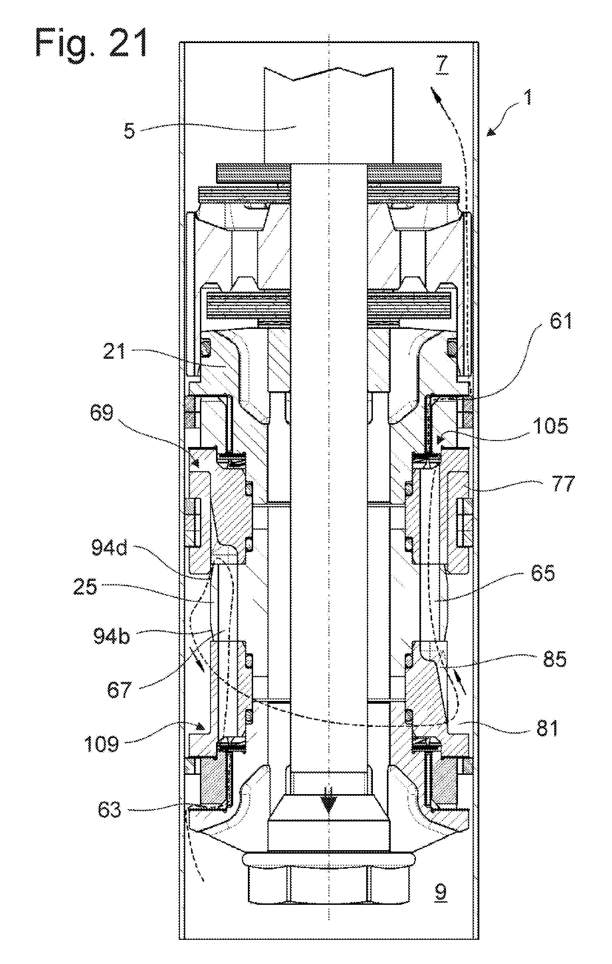

- Fig. 17- 23: Betriebsverhalten der Kolbenanordnung für eine zweite Bewegungsrichtung

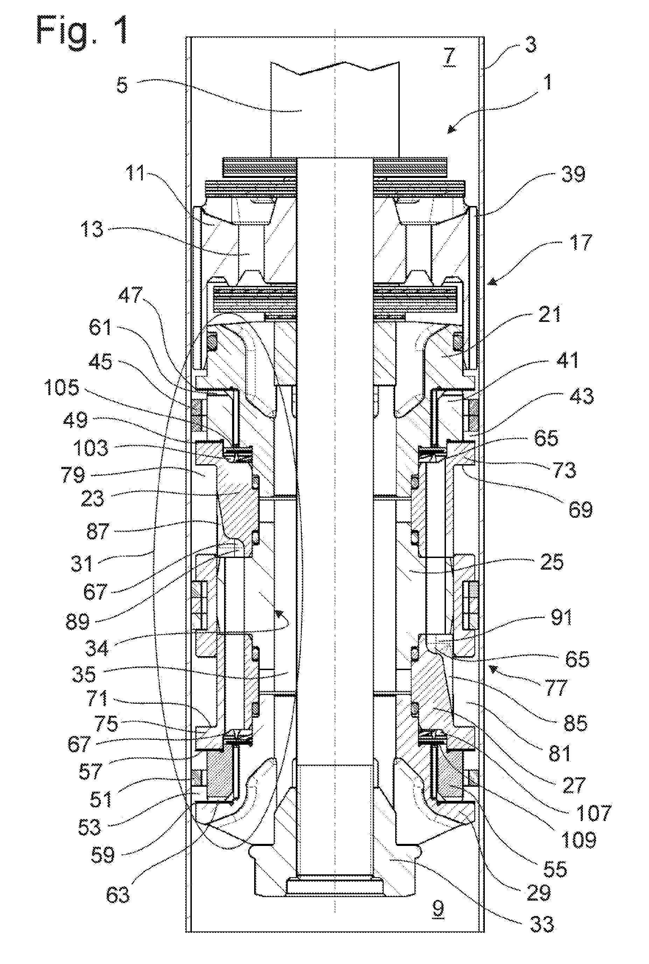

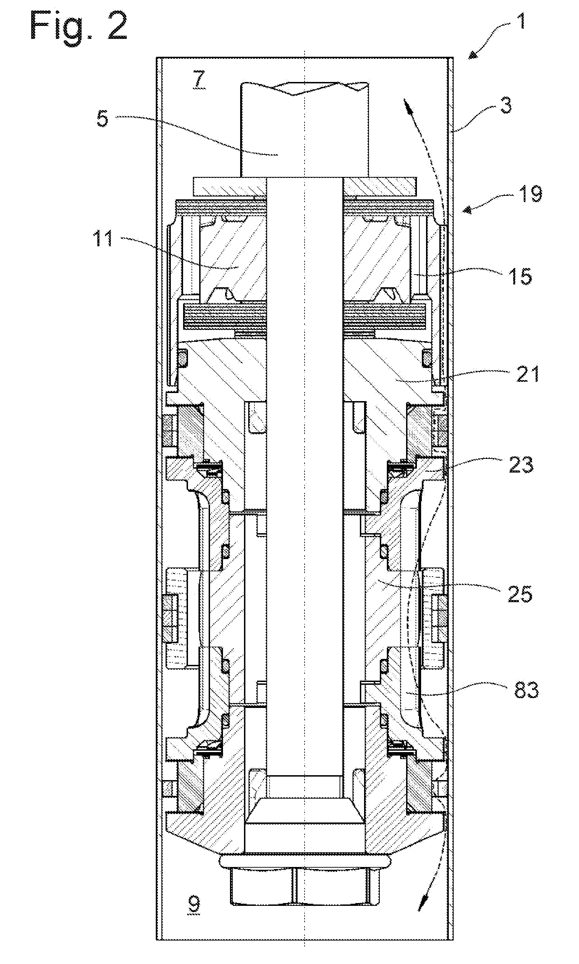

Die Figuren 1 und 2 zeigen eine Kolbenanordnung 1 innerhalb eines dämpfmediumgefüllten Zylinders 3 als Teil eines Schwingungsdämpfers. Dabei ist es unerheblich, ob der Schwingungsdämpfer nach dem Einrohr- oder Zweirohrprinzip aufgebaut ist. Die Kolbenanordnung ist an einer Kolbenstange 5 befestigt und unterteilt den Zylinder 3 in einen kolbenstangenseitigen und einen kolbenstangenfernen Arbeitsraum 7; 9.

Ein Kolben 11 innerhalb der Kolbenanordnung 1 besitzt Durchtrittskanäle 13; 15 (Fig. 2), die mit Ventilscheiben bestückt sind, so dass für beide Durchströmungsrichtungen Dämpfventile 17; 19 zur Verfügung stehen.

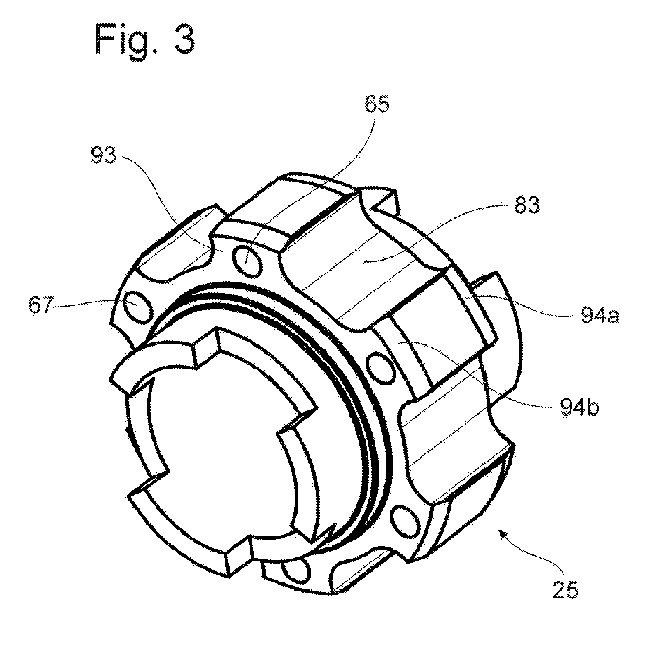

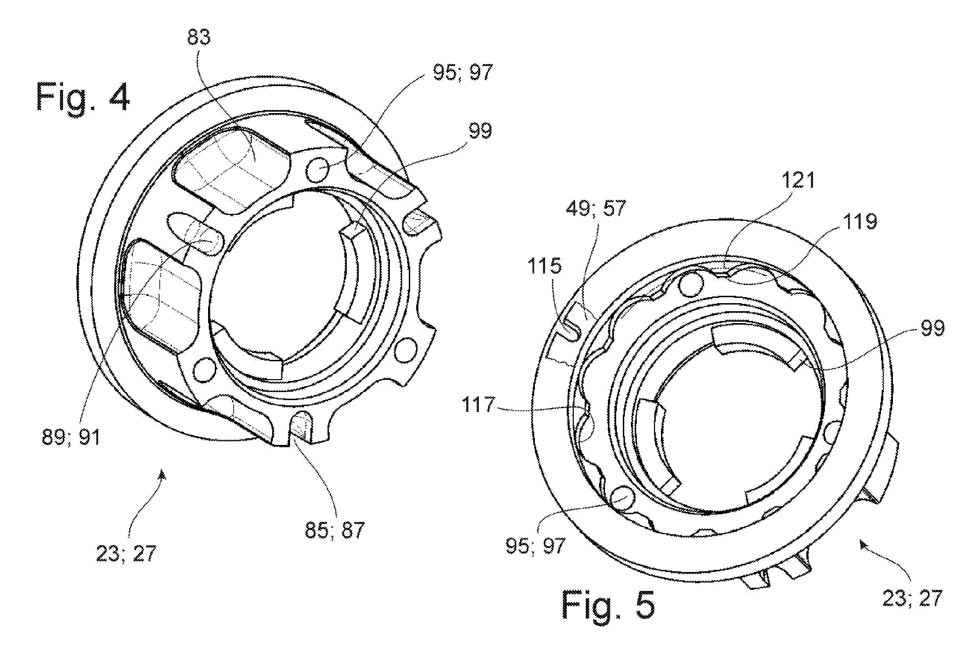

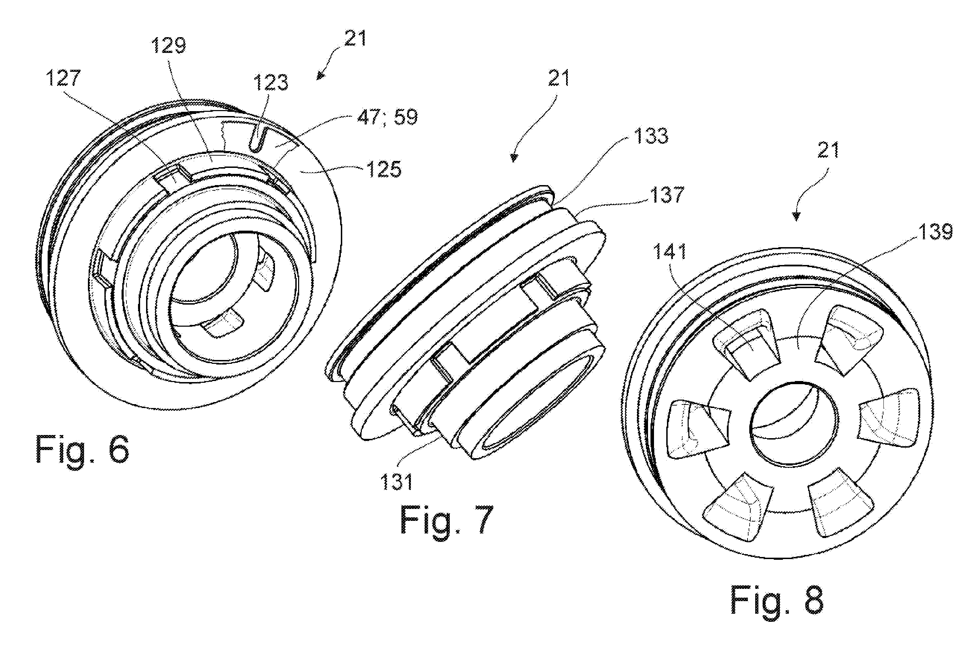

Neben dem Kolben 11 umfasst die Kolbenanordnung in Reihe einen Verteilerring 21, Figuren 6 - 8, ein erstes Kopfteil 23, Fig. 4 und 5, eine Distanzhülse 25, Fig. 3, ein zweites Kopfteil 27 und eine Spannhülse 29. Alle genannten Bauteile 21 - 29 bilden eine Baugruppe 31 zur Erzeugung einer amplitudenselektiven Dämpfkraft und werden von der Kolbenstange 5 durchdrungen. Zumindest die beiden Kopfteile 23; 27 sind als Gleichteile ausgeführt. Eine Kolbenmutter 33 fixiert die Baugruppe 31 axial. Die Kolbenstange 5 und die Mantelfläche 34 der Baugruppe 31 bilden einen Ringraum 35 zum Dämpfmediumaustausch über die Dämpfventile 17; 19 zwischen den beiden Arbeitsräumen 7; 9, wobei in der Spannhülse 29 Durchströmungsfenster 37 für das Dämpfmedium ausgeführt sind.

Hydraulisch parallel zu den Dämpfventilen 17; 19 besteht eine Strömungsverbindung 39, die beispielsweise durch axiale Kanäle in der Mantelfläche des Kolbens 11 ausgeführt sein können. Zwischen dem Verteilerring 21 und dem ersten Kopfteil 23 ist ein Zwischenring 41 verspannt, der eine Schaltringnut 43 für einen ersten axial beweglichen Ventilring 45 in der Höhe bestimmt. Beidseitig am Zwischenring 41 sind noch Voröffnungsscheiben 47; 49 mit jeweils unterschiedlichen randseitigen Aussparungen angeordnet. Eine gleichartige Ausführung eines axial beweglichen Ventilrings 51 in einer Schaltringnut 53, die von einem Zwischenring 55 und Voröffnungsscheiben 57,59 gebildet werden, ist zwischen dem zweiten Kopfteil 27 und der Spannhülse 29 ausgeführt. Die Schaltringnuten 43; 53 verfügen jeweils über einen Anschluss 61; 63 zu Kanälen 65; 67, die abschnittsweise von den beiden Kopfteilen 23; 27 und der Distanzhülse 25 gebildet werden.

Beide Kopfteile 23; 27 verfügen über Anschlagflächen 69; 71 an ihren Ringstegen 73; 75, wobei ein axial beweglicher Schaltring 77 gleitend auf den Kopfteilen 23; 27 und der Distanzhülse 25 gelagert ist. Der Schaltring 77 begrenzt mit den Anschlagflächen 69; 71 Ringräume 79; 81, die sich axial in seiner Größe in Abhängigkeit der Schaltstellung des Schaltrings verändern. Beide Ringräume 79; 81 stehen über axial verlaufende Verbindungsnuten 83 in den äußeren Mantelflächen der Kopfteile 23; 27 und der Distanzhülse 25 in Verbindung und ermöglichen eine Hinterströmung des Schaltrings 77 (Fig. 2).

Jedes Kopfteil 23; 27 verfügt über mindestens eine Queröffnung 85; 87, die wechselweise an sacklochförmigen Kanälen 89; 91 angeschlossen sind. In diesem Ausführungsbeispiel kommen, wie aus den Darstellungen der Distanzhülse 25 und der Kopfteile 23; 27 nach Fig. 4 und 5 drei sacklochförmige Kanäle 89; 91 für die Kolbenstangeneinfahrbewegung in Richtung des Arbeitsraums 9 und drei Kanäle 91 für die Kolbenstangenausfahrbewegung zur Anwendung. Die Distanzhülse 25 verfügt auf ihrer Mantelfläche über axial verlaufende Stege 93 für die Kanäle 65, wobei zwischen den Stegen 93 die Verbindungsnuten 83 erkennbar sind. Dadurch ergibt sich für die Distanzhülse eine zahnradähnliche Kontur. Eine Kontaktfläche 94 zum Schaltring 77, die sich zwischen den beiden Anschlagflächen 69; 71 in Axialrichtung der Kolbenanordnung erstreckt, ist gekrümmt ausgeführt, wobei die Krümmung durch Fasen 94a; 94b erreicht wird.

Für jeweils eine Bewegungsrichtung sind in den Kopfteilen 23; 27 abwechselnd Durchgangsöffnungen 95; 97 und die sacklochförmige Kanäle 89; 91 eingeformt, die in den Queröffnungen 85; 87 münden und von einer der Distanzhülse 25 zugewandten Stirnfläche ausgehen. Die Querschnitte der Queröffnungen 85; 87 verringern sich in Richtung der jeweils benachbarten Anschlagfläche. Die Kanäle 65; 67 bilden einen Bypasskanal zu den Verbindungsnuten 83 zwischen den Ringräumen 79; 81.

Der Verteilerring 21 und das erste Kopfteil 23 bilden einen Ringraum 103, Fig. 1, in dem ein Rückschlagventil 105 angeordnet ist, das einen Zustrom von Dämpfmedium in das erste Kopfteil 23 zulässt. Auch das zweite Kopfteil 27 und die Spannhülse 29 bilden einen gleichartigen Ringraum 107 in dem ebenfalls ein Rückschlagventil 109 angeordnet ist, das einen Zustrom in die Kanäle 67 ermöglicht.

Zum besseren Verständnis ist in der Fig. 5 beispielhaft ein Ausschnitt aus der Voröffnungsscheibe 49; 57 (Fig. 1) mit einem Voröffnungsquerschnitt 115 als Teil der Schaltringnut dargestellt. Die Voröffnungsscheibe 49; 57 liegt auf einer Stirnfläche auf, die entweder in Richtung der Spannhülse 29 oder des Verteilerrings 21 weist. Ausgehend von dieser Stirnfläche folgt eine gestufte Durchgangsöffnung, mit einem wellenförmigen Auflageprofil 117. Der innere Durchmesser bildet Zentrierflächen 119 für eine scheibenförmige Feder eines der Rückschlagventile 105; 109 (Fig. 1). Eine Oberseite 121 des Auflageprofils dient als Abhubbegrenzungsfläche für die Ventilscheibe des jeweiligen Rückschlagventils 105; 109, dessen gestrichelt dargestellter Außendurchmesser kleiner ist als die maximale radiale Ausdehnung des Wellenprofils, so dass bei einer maximalen Öffnungsstellung des Rückschlagventils eine Mehrzahl von Durchtrittsöffnungen mit einem kreisabschnittsförmigen Querschnitt vorliegt.

In der Figurenfolge 6 - 8 ist der Verteilerring als Einzelheit dargestellt. In der Fig. 6 wird ein Ausschnitt der Voröffnungsscheibe 47; 59 mit einem Voröffnungsquerschnitt 123 gezeigt, die auf einer Auflagefläche 125 verspannt ist. Auf einem der Auflagefläche folgenden axialen Absatz sind auf dem Umfang mehrere Nuten 127 eingearbeitet, die einen Teil der Anschlüsse 61 (Fig. 1) zum Rückschlagventil 105 bilden. Der Absatz dient als Zentrierfläche 129.

In Fig. 7 ist ein zweiter Absatz erkennbar, der eine Zentrierfläche 131 für die Ventilscheibe des Rückschlagventils 105 bildet. Des Weiteren wird diese Zentrierfläche 131 für das erste Kopfteil 23 verwendet. Am anderen Ende verfügt der Verteilerring 21 über eine Ringnut 133 für eine Dichtung 135 (Fig. 1) und eine Zentrierfläche 137 zum Kolben 11.

Fig. 8 zeigt die Oberseite des Verteilerrings 21 mit einer Spannfläche 139 für die Ventilscheiben des Dämpfventils 17 am Kolben, sowie Durchgangsöffnungen 141 zu den Kolbenventilen 17; 19.

Die Figur 1 zeigt die Kolbenanordnung 1 mit den idealen mittigen Ausgangspositionen des Schaltrings 77 zwischen den Anschlagflächen 69; 71 und den beiden Ventilringen 45; 51 in den Schaltringnuten 43; 53. In diesem Zustand der Kolbenanordnung kann das Dämpfmedium unabhängig von der Kolbenstangenbewegungsrichtung über die Strömungsverbindung 39, entlang der Schaltringnut 43 durch die Ringräume 79; 81 und der Schaltringnut 53 fließen. Die vorstehend beschriebene Strömungsverbindung bewirkt stets die weichste Dämpfkrafteinstellung der Kolbenanordnung, bei der die Dämpfventile 17; 19 noch geschlossen sind.

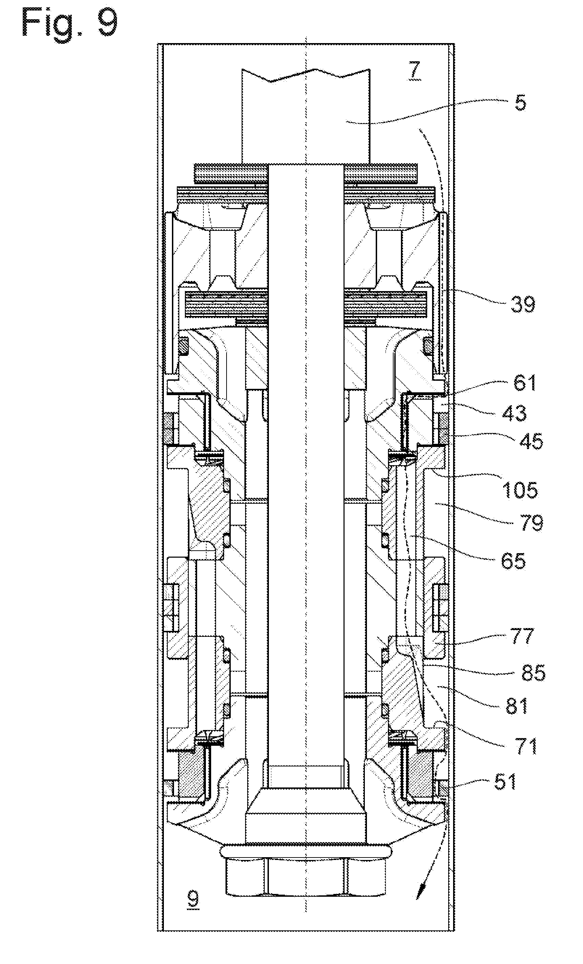

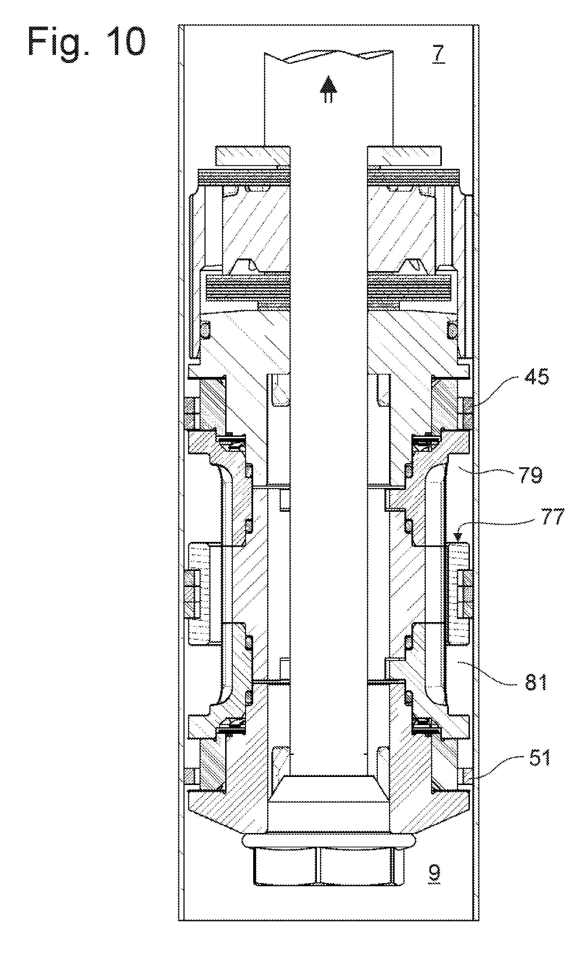

In den Fig. 9 und 10 bewegt sich die Kolbenstange 5 in Richtung des Arbeitsraums 7. Der Ventilring 45 liegt schon an der Nutenseitenwand der Schaltringnut 43 an und blockiert bis auf einen kleinen Voröffnungsquerschnitt den Dämpfmediumstrom über die Schaltringnut in den Ringraum 79. Der Schaltring 77 und der Ventilring 51 haben sich zwar relativ zur Kolbenanordnung 1 in Richtung des Arbeitsraums 9 bewegt, liegen aber noch nicht an der Anschlagfläche bzw. der Schaltringnutseitenwand an. Das Dämpfmedium folgt dem gestrichelt dargestellten Weg über die Strömungsverbindung 39 in den Anschluss 61, durch das geöffnete Rückschlagventil 105, in den Kanal 65 und tritt an den Queröffnungen 85 in den Ringraum 81 aus, von dem aus sich der Strömungsweg durch die die Schaltringnut 53 fortsetzt, wie durch die gestrichelte Linie verdeutlicht werden soll. Die Dämpfkraft wird vom Drosselwiderstand des Strömungswegs vom Anschluss 61 bis in den Kanal 65 bestimmt, da nun bei einer Kolbenstangenbewegung der gesamte Volumenstrom durch diesen im Vergleich zum offeneren Weg in der Schaltstellung nach Fig. 1 engeren Querschnitten fließen muss.

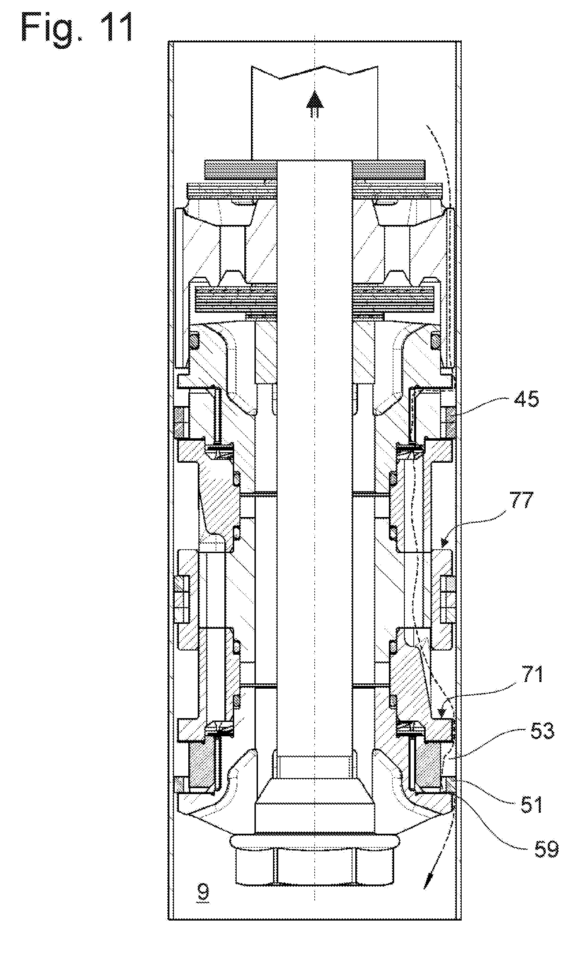

Im weiteren Hubverlauf nach Fig. 11 erreicht auch der Ventilring 51 die in Richtung Arbeitsraum 9 weisende Nutseitenfläche der Schaltringnut 53, hingegen hält der Schaltring 77 noch einen Abstand zur Anschlagfläche 71 ein. Der Strömungsverlauf des Dämpfmediums entspricht der Beschreibung zur Fig. 9. Der Drosselwiderstand wird nun aber durch die Voröffnungsscheibe 59 in der Schaltringnut 53 bestimmt, so dass bei gleicher Kolbenstangenbewegungsgeschwindigkeit im Vergleich zu den Figuren 9 und 10 eine weitere Dämpfkraftsteigerung vorliegt.

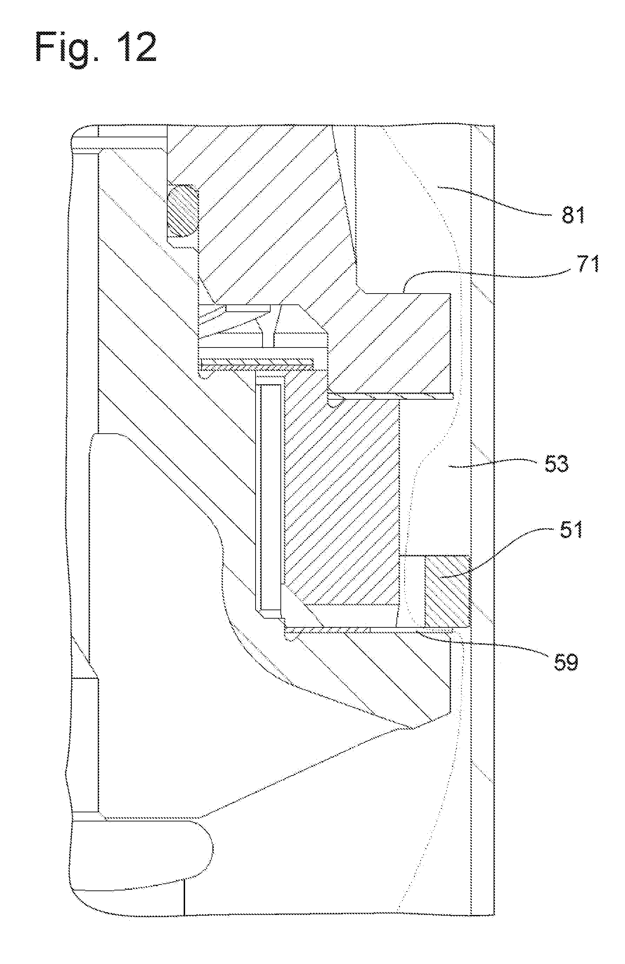

Die Fig. 12 zeigt eine Vergrößerung im Bereich der Schaltringnut 53. Der Strömungspfad ist wieder durch eine gestrichelte Linie verdeutlicht. Auch dann, wenn der Ventilring 51 an der Voröffnungsscheibe 59 anliegt, steht die Voröffnung 59v zur Verfügung.

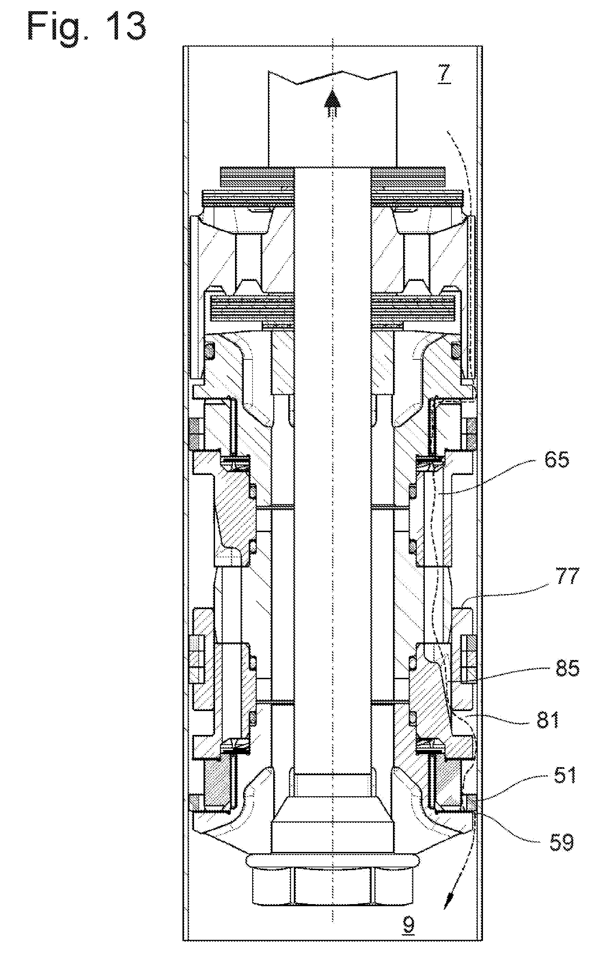

Die Fig. 13 zeigt die Kolbenanordnung 1 in einer Hubphase, in der der Schaltring 77 die Queröffnung 85, die den Kanal 65 mit dem Ringraum 81 verbindet, zunehmend verschließt. Die Voröffnungsscheibe 59 verfügt, s. Fig. 12, über einen größeren Drosselquerschnitt 59v als der nun wirksame Querschnitt der Queröffnung 85, so dass die Queröffnung 85 die wirksame Dämpfkraft bestimmt.

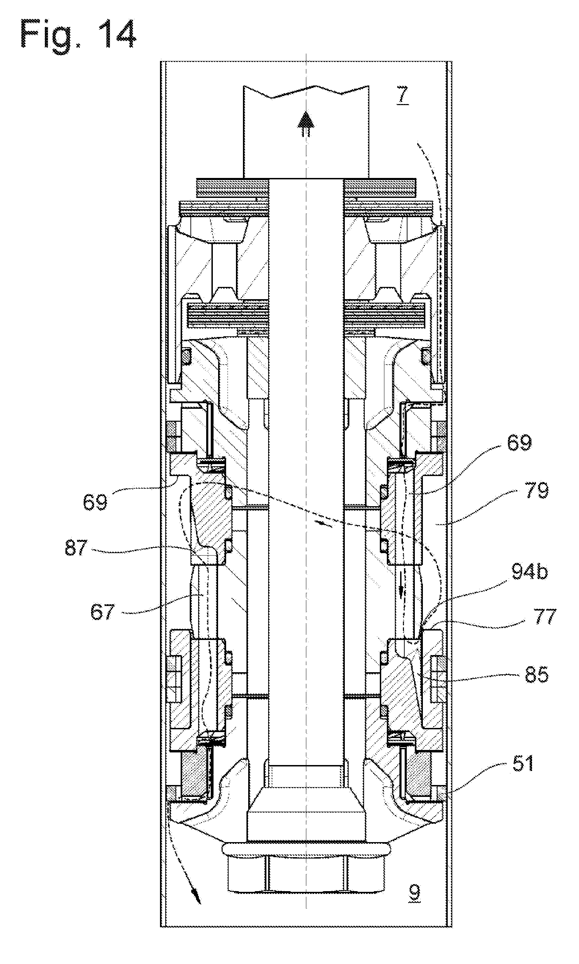

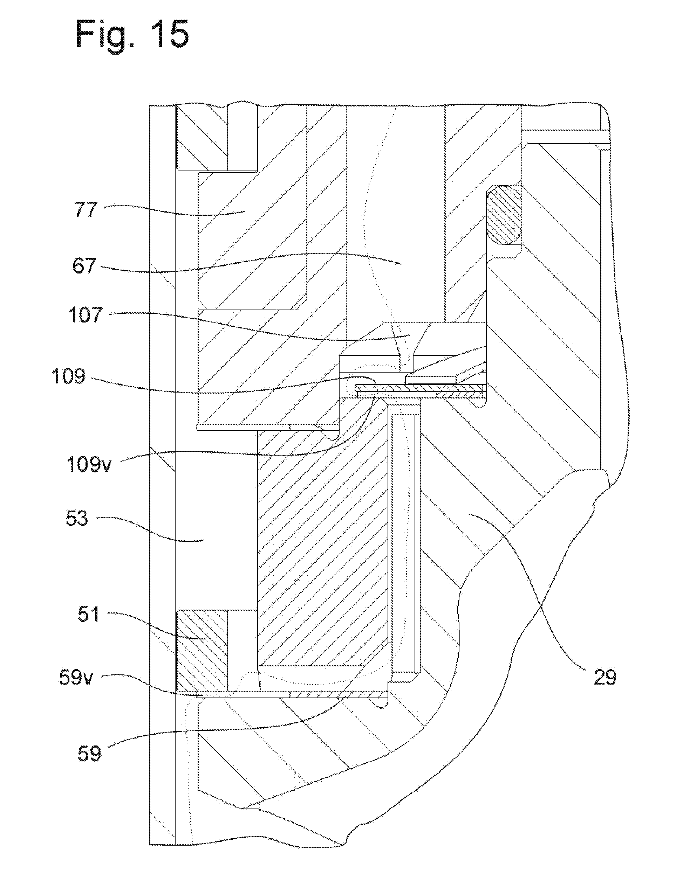

In der Zusammenschau der Fig. 13 und 14 ist erkennbar, dass der Schaltring 77 die Queröffnung 85, im weiteren 85 bezeichnet, in Richtung des Ringraums 81 verschließt und damit den Dämpfmediumstrom in Richtung des Ventilrings 51 unterbindet ,Fig.13, jedoch der Strömungsweg vom Kanal 65 in den Ringraum 79 freigegeben wird, da die Fase 94b als eine zum Schaltring 77 wirksame Kontaktfläche gekrümmt ausgeführt ist und damit der Schaltring unterströmt werden kann, Fig.14, auch wenn der Schaltring 77 an der Anschlagfläche 71 zu Anlage kommt. Die Kolbenanordnung 1 verfügt für jede Strömungsrichtung des Dämpfmediums über einen Bypass in der Bauform eines Kanals 65 und über den Ringraum 79 kann das Dämpfmedium über die unverschlossene Queröffnung 85 im Bereich der Anschlagfläche 69 zu einem Bypass 67 fließen, der auch für die Dämpfmediumführung bei einer Kolbenstangenbewegung in Richtung des Arbeitsraums 9 vorgesehen ist. Das Dämpfmedium setzt seinen Weg bis zum geschlossenen Rückschlagventil 109 fort, das in dem Bypass 67 angeordnet ist und auch in der geschlossenen Position einen Restquerschnitt als weiteren Voröffnungsquerschnitt 109v bestimmt, der wiederum kleiner ist als der Voröffnungsquerschnitt 59v der Voröffnungsscheibe 59, Fig. 15. Damit wird eine weitere Dämpfkraftsteigerung bei unveränderter Kolbenstangengeschwindigkeit erreicht.

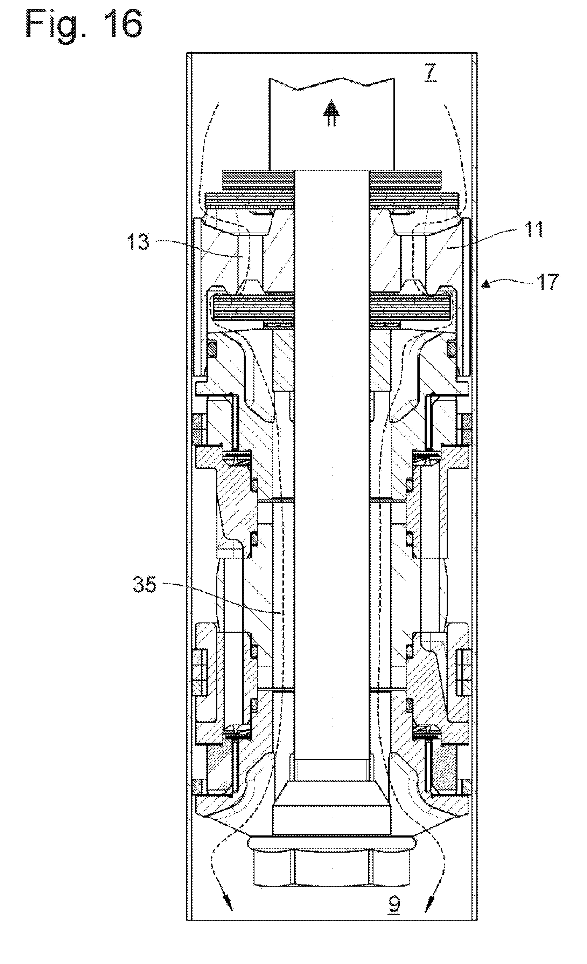

Die Fig. 16 beschreibt den Zustand, wenn die Kolbenanordnung einen denselben Weg zurückgelegt hat, wie in der Abfolge der Figuren 1 -15, jedoch die Kolbengeschwindigkeit ein definiertes Niveau übersteigt und damit eine Öffnungskraft auf das Dämpfventil 17 am Kolben 11 erzeugt. Das Dämpfmedium fließt durch die Durchtrittskanäle 13, entlang des Dämpfventils 17 in den Ringraum 35 und weiter in den Arbeitsraum 9. Nun liegt in der Kolbenanordnung 1 die härteste Dämpfkrafteinstellung vor.

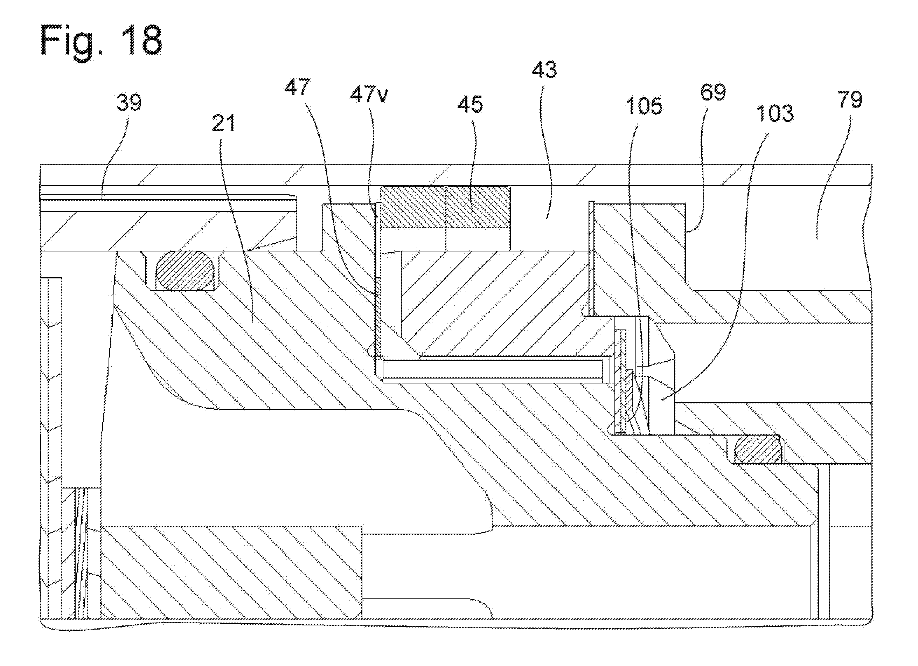

Die Kolbenanordnung 1 ist hinsichtlich der Strömungswege innerhalb der Baugruppe 31, siehe Fig. 1, spiegelbildlich ausgeführt. Ausgehend von der Fig. 1, bei der die weichste Dämpfkrafteinstellung vorliegt, bewegt sich die Kolbenstange 5 in Richtung des Arbeitsraums 9. Dabei verschiebt sich der Ventilring 45 innerhalb der Schaltringnut 43. In der Fig. 18 ist der Bereich um den Ventilring 45 vergrößert dargestellt. Das Dämpfmedium fließt über die Schaltringnut 53 und die Ringräume 81; 79 in die Schaltringnut 43. Der Voröffnungsquerschnitt 47v in der Voröffnungsscheibe 47 am Verteilerring 21 bestimmt die Dämpfkraft, wobei das Dämpfmedium über die Strömungsverbindung 39 in den Arbeitsraum 7 weiterströmen kann.

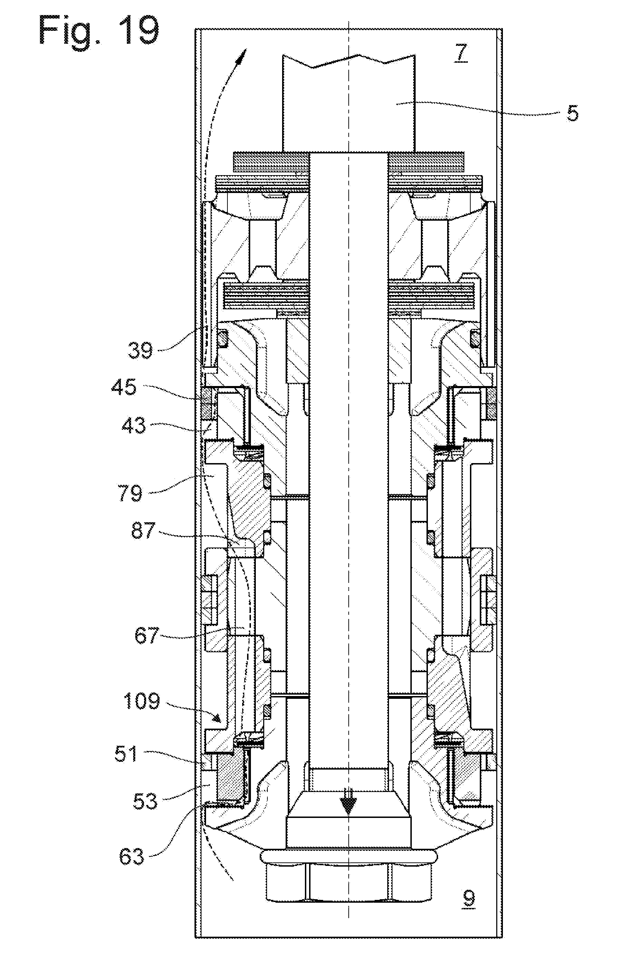

In Fig. 19 liegen beide Ventilringe 45; 51 an den Nutseitenflächen an, die in Richtung des Arbeitsraums 7 weisen. Das Dämpfmedium strömt durch den Anschluss 63 entlang des geöffneten Rückschlagventils 109 in den Bypass 67, über die Queröffnung 85 entlang des Ringraums 79 in die Schaltringnut 43. Der Drosselwiderstand in dem Bereich zwischen den Anschluss 63 und dem Rückschlagventil 109 addiert sich zum Drosselwiderstand des Voröffnungsquerschnitts 47v, Fig. 18, so dass bei gleicher Kolbenstangenbewegungsgeschwindigkeit eine nochmals erhöhte Dämpfkraft vorliegt.

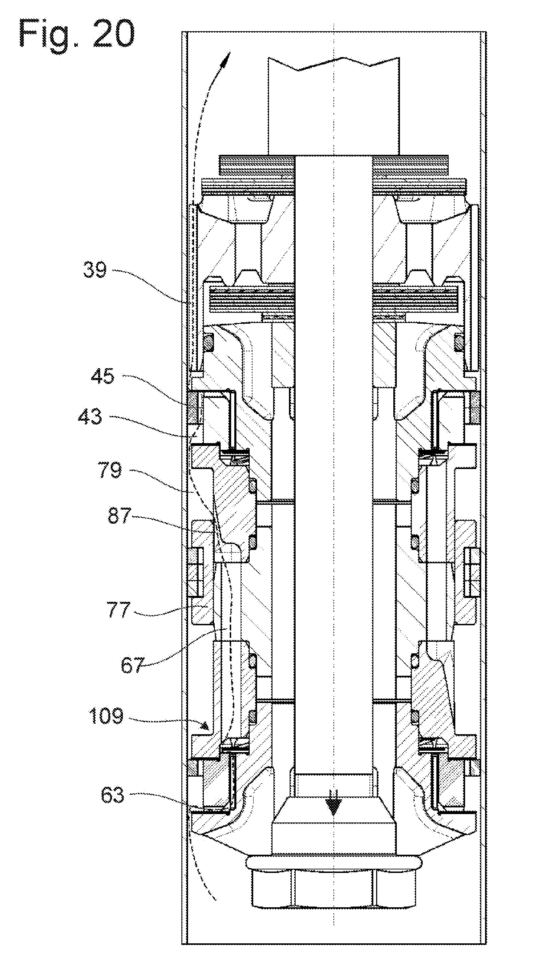

Der Schaltring 77 hat in der Fig. 20 die Queröffnung 85 schon teilweise verschlossen, so dass zwar noch der Strömungsweg gemäß Fig. 19 vorliegt, jedoch mit der Schaltring 77 in Verbindung mit der Queröffnung 85 ein Schieberventil zusätzlich als Drossel einsetzt, die nochmals das Dämpfkraftniveau bei weiterhin konstanter Kolbenstangen bewegungsgeschwindigkeit anhebt.

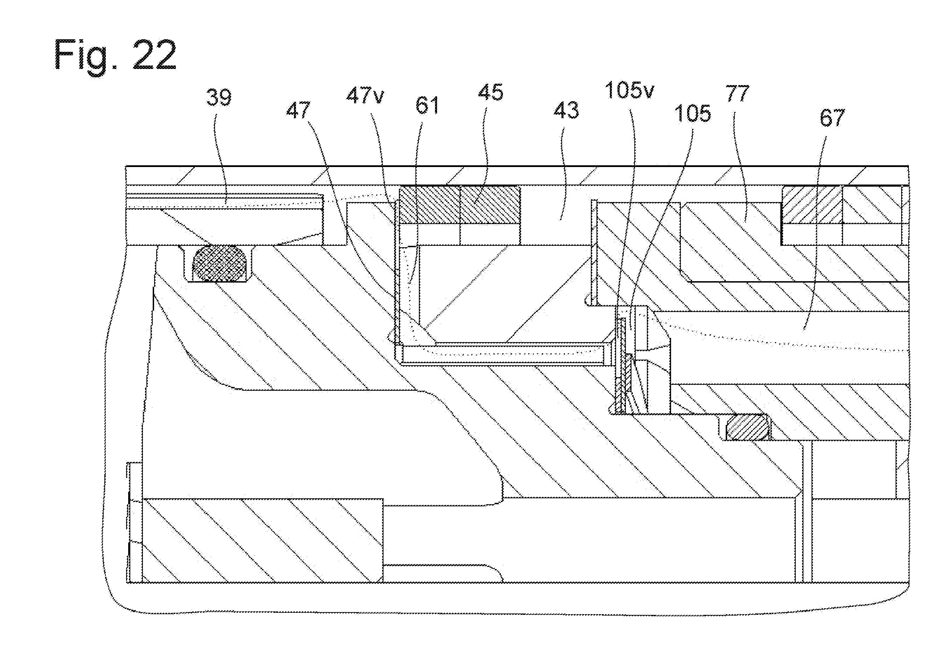

Bei fortgesetztem Kolbenstangenhub in Pfeilrichtung kommt der Schaltring 77 an der Anschlagfläche 69 zur Anlage. Damit steht der direkte Weg über den Bypass 67 in den Ringraum 79 nicht mehr zur Verfügung. Das Dämpfmedium kann aber noch entlang der Phase 94a der Distanzhülse 25 im Bereich der Kontaktfläche zum Schaltring 77 in den Ringraum 81 fließen und die Queröffnung 87, die in den Figuren 9 bis 13 für die Zugrichtung der Kolbenstange zur Verfügung steht, in den Bypasskanal 65 in Richtung des Rückschlagventils 105 am Verteilerring 21 strömen. Das Rückverschlagventil 105 ist nicht hermetisch dicht, sondern verfügt, wie die Fig. 22 zeigt, über einen Voröffnungsquerschnitt 105v, der von einer Aussparung in der Ventilscheibe gebildet wird. Damit kann das Dämpfmedium ausgehend vom Arbeitsraum 9 in den Anschluss 63, dem offenen Rückschlagventil 109 in den Bypasskanal 65 und weiter entlang der Fase 94a in den Ringraum 81 fließen, so dass der weitere Strömungsweg über die Queröffnung 87 in den Bypasskanal 65, dem Voröffnungsquerschnitt 109v des geschlossenen Rückschlagventils 109 in den Anschluss 61 und damit in den Voröffnungsquerschnitt 47v der Voröffnungsscheibe 47 zur Strömungsverbindung 39 auf der Mantelfläche des Kolbens zur Verfügung steht, wobei der weitere Voröffnungsquerschnitt 109v nochmals zusätzlich die Dämpfkraftwirkung der Kolbenanordnung 1 bei gleichbleibender Kolbenstangenbewegungsgeschwindigkeit steigert.

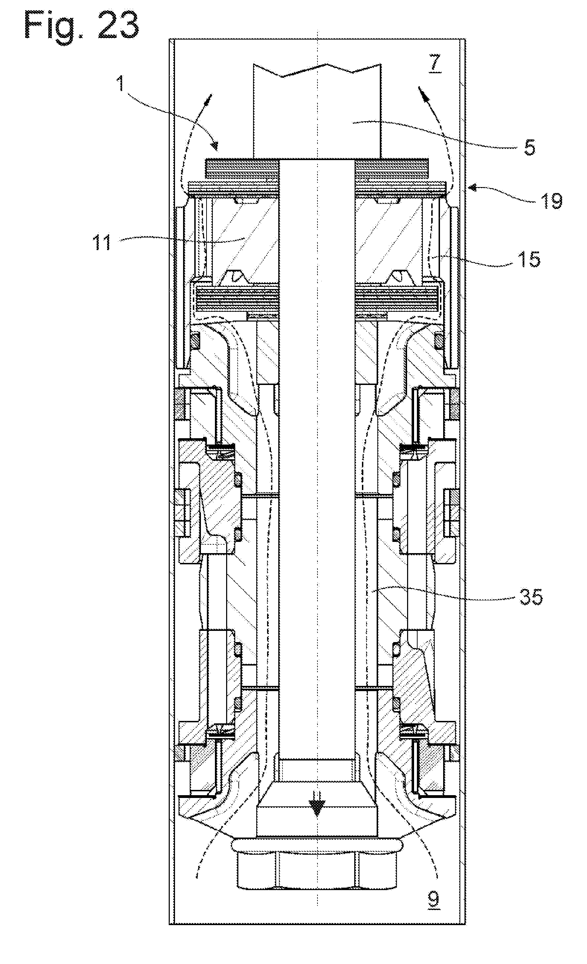

Mit der Fig. 23 hat die Kolbenanordnung 1 die maximale Dämpfkraftwirkung erreicht. Das Dämpfmedium fließt zum überwiegenden Teil vom Arbeitsraum 9 in den Ringraum 35 und setzt seinen Weg zu den Durchtrittskanälen 15 im Kolben 11 fort, so dass Dämpfventil 19 öffnet.

Durch den Einsatz der Ventilringe 45; 51 als zusätzliche Schaltringe kann eine vielstufige Steigerung der Dämpfkraft der Kolbenanordnung erreicht werden, so dass ein nahezu kontinuierlicher Übergang von der weichsten in die härteste Dämpfkrafteinstellung möglich ist. Es steht damit weiterhin eine komfortable Dämpfkrafteinstellung zur Verfügung, jedoch wird auch eine den Sicherheitsaspekt berücksichtigende Gesamtdämpfkraftkennlinie erreicht.

## Patentansprüche

1. Schwingungsdämpfer (1) mit amplitudenselektiver Dämpfkraft, umfassend eine Kolbenstange (5), die in einem dämpfmediumgefüllten Zylinder (3) axial beweglich geführt ist, wobei die Kolbenstange (5) eine Kolbenanordnung (1) trägt, die den Zylinder in einen kolbenstangenseitigen und einen kolbenstangenfernen Arbeitsraum (7; 9) unterteilt, wobei zwischen den Arbeitsräumen (7; 9) eine Strömungsverbindung (39; 65; 67; 79; 81; 61; 63; 43; 53) vorliegt, die in Abhängigkeit von der Kolbenstangenbewegung von einem zwischen zwei Anschlagflächen (69; 71) axial beweglichen Schaltring (77) in Verbindung mit mindestens einem axial beweglichen Ventilring (45; 51) in einer Schaltringnut (43; 53) eine Dämpfkraft bestimmt, wobei der Schaltring (77) mit der Anschlagfläche (69) einen den kolbenstangenseitigen Arbeitsraum (7) benachbarten Ringraum (79) und mit einer Anschlagfläche (71) einen den kolbenstangenfernen Arbeitsraum (9) benachbarten Ringraum (81) begrenzt,
**dadurch gekennzeichnet,**
**dass** die axial Ausdehnung der Schaltringnut (43; 53) für den axial beweglichen Ventilring (45; 51) so groß gewählt ist, dass auf einem relevanten Hubbereich der Kolbenstange (5) ein Umströmen des Ventilrings (45; 51) gewährleistet ist

2. Schwingungsdämpfer nach Anspruch 1,
**dadurch gekennzeichnet,**
**dass** der Abstand zwischen Nutseitenflächen der Schaltringnut (43; 53) kleiner ist als der Abstand zwischen den Anschlagflächen (69; 71) für den Schaltring (77).

3. Schwingungsdämpfer nach Anspruch 1,
**dadurch gekennzeichnet,**
**dass** jeweils außerhalb der Anschlagflächen (69; 71) ein Ventilring (45; 51) in einer Schaltringnut (43; 53) zur Verfügung steht.

4. Schwingungsdämpfer nach Anspruch 3,
**dadurch gekennzeichnet,**
**dass** der maximale Hubweg des Ventilrings (45; 51) für eine erste Bewegungsrichtung der Kolbenstange (5) kleiner ist als der Hubweg für den Ventilring (45; 51), der bei einer gegensinnigen Kolbenstangenbewegung wirksam wird.

5. Schwingungsdämpfer nach Anspruch 1,
**dadurch gekennzeichnet,**
**dass** in einem Bypass (65; 67) zu dem vom Schaltring (77) gesteuerten Strömungsweg ein weiterer Voröffnungsquerschnitt (105v; 109v) angeordnet ist, der kleiner ist als ein Voröffnungsquerschnitt (59v; 47v), der von dem Ventilring (45; 51) angesteuert wird.

6. Schwingungsdämpfer nach Anspruch 5,
**dadurch gekennzeichnet,**
**dass** in dem Bypass (65; 67) ein Rückschlagventil (105; 109) angeordnet ist, das in der geschlossenen Position einen Restquerschnitt als weiteren Voröffnungsquerschnitt (1 05v; 109v) bestimmt.

7. Schwingungsdämpfer nach Anspruch 6,
**dadurch gekennzeichnet,**
**dass** für jede Strömungsrichtung des Dämpfmediums ein Bypass (65; 67) vorliegt und der Schaltring (77) auch bei Anlage an einer Anschlagfläche (69; 71) die Querschlussöffnung (85; 87) ausgehend vom Bypass (65; 67) derart teilweise offenhält, so dass Dämpfmedium über den größeren der beiden Ringräume (79; 81) und der offenen Anschlussöffnung (85; 87) zu einem Bypass (65; 67) für die entgegengesetzte Strömungsrichtung in Richtung des geschlossenen Rückschlagventils (105; 109) strömen kann.

8. Schwingungsdämpfer nach Anspruch 7,
**dadurch gekennzeichnet,**
**dass** eine Kontaktfläche (94a; 94b) zu dem Schaltring (77) zwischen den beiden Anschlagflächen (79; 81) in Axialrichtung der Kolbenanordnung (1) gekrümmt ausgeführt ist.
